# DEMANDE DE BREVET EUROPEEN

(11) **EP 0 551 024 A1**
(43) Date de publication de la demande: **14.07.1993**
(21) Numéro de dépôt: 92400048.2
(22) Date de dépôt: 08.01.1992
(51) Int. Cl.: B60S 3/04, A47L 1/16

(54) **Dispositif pour dégivrer**

(71) Demandeur: Robin, Jean Michel, F-91210 Draveil (FR)
(72) Inventeur: Robin, Jean Michel, F-91210 Draveil (FR)

(57) **Abrégé**

L'invention concerne un dispositif permettant de faire fondre rapidement le givre recouvrant une surface vitrée ou obstruant le mécanisme d'ouverture d'une portière.

Il est constitué d'une partie rigide (I), munie d'une poignée de préhension rigide (2) et d'un orifice (3) fermé en son extrémité supérieure par un bouchon fileté (4) doté d'un joint d'étanchéité (5). Orifice (3) par lequel est introduite l'eau chaude remplissant une poche souple (6) située sous la partie rigide (I). De languettes de caoutchouc (7) prolongements de la partie rigide (I), perpendiculaires à l'axe de la poignée de préhension (2).

L'utilisateur saisi la partie rigide (I) à l'aide de la poignée (2) et applique, la poche souple (6) remplie d'eau chaude du robinet, ainsi que l'une des languettes (7) sur la surface à dégivrer entraînant la fonte du givre ou de la glace, et l'assèchement simultané de la surface vitrée.

Le dispositif selon l'invention est particulièrement destiné au dégivrage du pare-brise de la lunette arrière, des vitres latérales, et des serrures de portières de véhicules à moteur.

## Description

La présente invention concerne un dispositif permettant de faire fondre rapidement le givre recouvrant une surface vitrée ou obstruant le mécanisme d'ouverture d'une portière.

L'élimination du givre recouvrant les surfaces vitrées d'un véhicule moteur froid, est traditionnellement effectué à l'aide d'un grattoir à main ou/et d'une bombe antigivre, action souvent longue et imparfaite, généralement désagréable pour l'utilisateur ayant le plus souvent les mains en contact direct avec le givre.

Le dispositif selon l'invention permet de remédier à ces inconvénients. Il comporte en effet, une partie rigide munie d'une poignée de préhension et d'un orifice de remplissage fermé en son extrémité supérieure par un bouchon filté doté d'un joint d'étanchéité.

Une poche souple, située sous la partie rigide, est remplie d'eau chaude du robinet et appliquée sur les surfaces vitrées, faisant fondre immédiatement le givre et évitant ainsi que les mains de l'utilisateur soient en contact direct avec le froid.

Les deux extrémités de la partie rigide perpendiculaires à l'axe de la poignée de préhension, sont prolongées pour former chacune une languette en caoutchouc mou, permettant d'assécher les vitres.

L'utilisateur choisit l'une ou l'autre des languettes et applique simulanément l'extrémité de la languette et la poche souple, contre la surface vitrée et par déplacement, en appui complet, de celles-ci fait fondre le givre tout en asséchant la vitre.

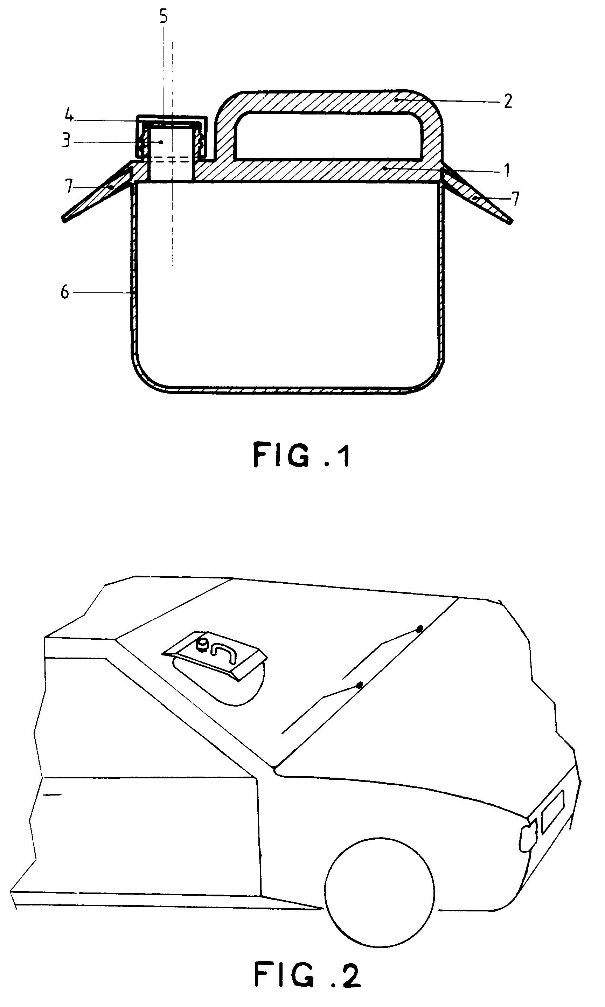

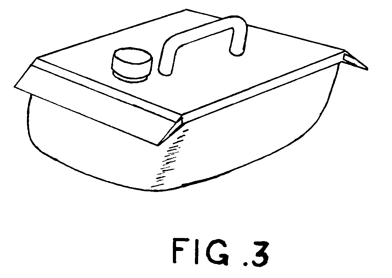

La figure I représente en coupe le dispositif selon l'invention.

Le dispositif représenté sur la figure I comporte une partie rigide (I) ayant approximativement des dimensions de l'ordre de I0 centimètres pour la largeur de I5 centimètres pour la longueur et de I centimètre d'épaisseur.
Sur cette partie rigide, une poignée de préhension (2) ainsi qu'un orifice filté de remplissage (3). La hauteur et la longueur de la poignée (2) est telle que l'utilisateur puisse y passer facilement la main. L'orifice de remplissage (3) a un diamètre suffisant pour que l'utilisateur puisse faire couler l'eau chaude d'un robinet au travers de celui-ci. Cet orifice est fermé par un bouchon filté (4) doté d'un joint d'étanchéité (5).
Le volume de la poche souple (6) située sous la partie rigide (I) est de I,5 litre environ. La membrane qui constitue cette poche souple (6) est résistante et assez fine pour que la chaleur de l'eau puisse être diffusée.

La longueur des languettes de caoutchouc (7) est égale à la longueur de chacun des bords de la partie rigide, perpendiculaires à l'axe de la poignée de préhension (2).
La largeur de ces languettes est de l'ordre de 4 centimètres, leur épaisseur de 2 millimètres dans leur extrémité et ont une base de I centimètre faisant corps à la partie rigide (I).

En vue de coupe, selon la figure I, l'inclinaison des languettes de caoutchouc (7) par rapport à l'axe longitudinal de la partie rigide (I) est approximativement de l'ordre de 30° degré vers la poche souple et permettent d' assécher la vitre en raclant.

Le dispositif selon l'invention est réalisé suivant le procédé de confection sur forme et de surmoulage, ou par injection.

Le dispositif est avantageusement réalisé dans un mélange de caoutchouc et de styrène-butadiène.

## Revendications

1. Dispositif permettant de faire fondre rapidement le givre recouvrant une surface vitrée ou obstruant le mécanisme d'ouverture d'une portière caractérisé en ce qu'il comporte une partie rigide (I) munie d'une poignée de préhension rigide (2), et d'un orifice de remplissage (3) fermé en son extrémité supérieure par un bouchon filté (4) doté d'un joint d'étanchéité (5), d'une poche souple remplie d'eau chaude située sous la partie rigide (I) que l'utilisateur applique sur les surfaces à dégivrer, et qu'en outre les deux extrémités de la partie rigide (I) perpendiculaires à l'axe longitudinal de la poignée de préhension (2) sont pourvues chacune d'une languette de caoutchouc (7) inclinée, résultant du prolongement de la partie rigide (I).

2. Dispositif selon la revendication I caractérisé en ce qu'il est réalisé d'une part dans un mélange de caoutchouc et de styrène-butadiène, et d'autre part de polymères.
